# EUROPÄISCHE PATENTSCHRIFT

(11) **EP 0 697 571 B1**
(45) Veröffentlichungstag und Bekanntmachung des Hinweises auf die Patenterteilung: **17.12.1997**
(21) Anmeldenummer: 94112825.8
(22) Anmeldetag: 17.08.1994
(51) Int. Cl.: F24F 13/14, F16K 31/04, H02K 7/116

(54) **Stellantrieb mit Federrücklauf**
Actuator with spring-return mechanism
Actionneur avec dispositif de rappel à ressort

(43) Veröffentlichungstag der Anmeldung: 21.02.1996
(73) Patentinhaber: JOHNSON SERVICE COMPANY, Milwaukee, Wisconsin 53201 (US); JOVENTA AG, CH-8733 Eschenbach SG (CH)
(72) Erfinder: Birchmeier, Werner, CH-8645 Jona (CH)
(74) Vertreter: Albrecht, Rainer Harald, Dr.-Ing.

(56) Entgegenhaltungen:
- EP-A- 0 093 289
- EP-A- 0 330 804
- WO-A-84/03370
- US-A- 4 951 021

## Beschreibung

Die Erfindung betrifft einen Stellantrieb mit Federrücklauf, insbesondere für Klappen in Heizungs-, Lüftungs- und Klimaanlagen, mit einem Elektroantrieb, mit einem Untersetzungsgetriebe, welches eine die Stellbewegung spannbare Rückstellfeder für den Federrücklauf aufweist, und mit einer beim Federrücklauf betätigten Bremsvorrichtung.

Stellantriebe mit Federrücklauf werden in der Praxis oft als Regelantriebe eingesetzt, die nach vorgegebenen Regelfunktionen sowohl in Öffnungs- als auch in Schließrichtung Stellbewegungen von zur Durchflußmengenregelung eingesetzten Stellgliedern, beispielsweise Regelklappen, ausführen. Daneben werden die Stellantriebe mit Federrücklauf auch als sogenannte AUF/ZU-Antriebe zur Betätigung von Absperrklappen eingesetzt. Das an den Stellantrieb angeschlossene Stellglied wird hierbei elektrisch entweder in die Offen- oder in die Zustellung gebracht und dort gehalten. Daneben verlangen Sicherheitsbedingungen, daß die Stellglieder im Störfall, insbesondere bei einer Unterbrechung der Stromzufuhr zu dem Elektroantrieb, eine Sicherheitsstellung einnehmen. Zu diesem Zweck ist der Federrücklauf vorgesehen. Die Federenergie der Rückstellfeder wird so auf das Stellglied übertragen, daß dieses die gewünschte Sicherheitsfunktion erfüllt, wenn die Stromzufuhr zu dem Elektroantrieb unterbrochen ist. Es sind aber auch Ausführungen bekannt, bei denen die Auslösung des Federrücklaufes durch einen Stromimpuls erfolgt. Zumeist ist die Anordnung so getroffen, daß das Stellglied unter Federkraft geschlossen wird. Die Bremse dient der Schonung des Untersetzungsgetriebes, welches bei einer plötzlichen Energiefreisetzung der Rückstellfeder Schaden nehmen würde.

Ein Stellantrieb des eingangs beschriebenen Aufbaus ist aus WO-A-8403370 bekannt. Der Elektroantrieb und das Untersetzungsgetriebe sind auch beim Federrücklauf gekuppelt. Bei dieser Ausführung ist eine vollständige Rückstellung des Stellgliedes optimal sichergestellt.

Der Erfindung liegt die Aufgabe zugrunde, bei einer Vorrichtung des eingangs beschriebenen Aufbaus eine Einrichtung anzugeben, die eine betriebssichere und vollständige Rückstellung des Stellgliedes ermöglicht und nur einen geringen Platzbedarf aufweist.

Zur Lösung dieser Aufgabe lehrt die Erfindung, daß zwischen dem Elektroantrieb und dem Untersetzungsgetriebe eine Kupplung angeordnet ist, die ein antriebsseitiges Kupplungsbauteil und ein beim Federrücklauf von diesem lösbares getriebeseitiges Kupplungsbauteil aufweist, daß die Bremsvorrichtung als Fliehkraftbremse mit einem ortsfesten Bremstopf und einem drehbar gelagerten Bremsbackenträger, an dem durch Fliehkraft radial bewegliche Bremsbacken angeordnet sind, ausgebildet ist, daß der Bremsbackenträger das getriebeseitige Kupplungsbauteil bildet sowie einen Wellenschaft mit endseitigem, in das Untersetzungsgetriebe eingreifendem Ritzel aufweist und daß das antriebsseitige Kupplungsbauteil auf dem Wellenschaft des Bremsbackenträgers drehbar gelagert ist. Kupplung und Bremsvorrichtung bilden eine, in einer einzigen mechanischen Baugruppe realisierte Funktionseinheit.

Wenn der Stellantrieb als Regelantrieb eingesetzt werden soll, also Stellbewegungen nach vorgebenen Regelfunktionen in beiden Drehrichtungen ausführbar sein müssen, ist die Kupplung so auszulegen, daß bei eingerückter Kupplung Drehmomente in beiden Drehrichtungen von dem Elektroantrieb auf das Untersetzungsgetriebe übertragbar sind. Eine bevorzugte Ausführung des erfindungsgemäßen Stellantriebes, die als Regelantrieb einsetzbar ist, ist dadurch gekennzeichnet, daß die Kupplung als Planetengetriebe mit Außenrad, Planetenrädern und Zentralrad ausgebildet ist, wobei das Zentralrad als antriebsseitiges Kupplungsbauteil auf dem Wellenschaft des Bremsbackenträgers drehbar gelagert und von dem Elektroantrieb antreibbar ist, wobei die Planetenräder an dem Bremsbackenträger angeordnet sind und wobei das Außenrad bei eingerückter Kupplung arretiert und bei ausgerückter Kupplung frei drehbar ist. Eingerückte Kupplung bezeichnet den Betriebszustand, bei dem ein Kraftfluß von dem Elektroantrieb auf das Untersetzungsgetriebe gewährleistet ist. Ausgerückte Kupplung meint den Betriebszustand, bei dem der Kraftfluß von dem Elektroantrieb auf das Untersetzungsgetriebe unterbrochen ist. Solange das Außenrad arretiert ist, kann der Stellantrieb wie folgt in beiden Drehrichtungen operieren. Das vom Elektroantrieb angetriebene Zentralrad treibt über die Planetenräder den Bremsbackenträger und das mit diesem fest verbundene Ritzel an. Über das Untersetzungsgetriebe überträgt sich die Ritzelbewegung auf das Stellglied, wobei nach Maßgabe des Stellwegs auch die Rückstellfeder für den Federrücklauf gespannt wird. Die Rotationsgeschwindigkeit des Bremsbackenträgers ist durch das Untersetzungsverhältnis des Planetengetriebes so klein, daß die Fliehkraftbremse bei dieser Stellbewegung nicht anspricht. Bei ausgerückter Kupplung ist das Außenrad frei drehbar. Durch die Drehbeweglichkeit des Außenrades ist der Kraftfluß zwischen Antriebsrad und Untersetzungsgetriebe unterbrochen, was einer Auskupplung gleichkommt. Mit der Auskupplung wird der Federrücklauf eingeleitet. Die Federenergie der Rückstellfeder wird freigesetzt, wobei über das Untersetzungsgetriebe der Bremsbackenträger angetrieben wird. Dabei wird die Fliehkraftbremse aktiv. Die Masse der an dem Bremsbackenträger angeordneten Bremsbacken ist so abgestimmt, daß die Bremsbacken bei den entstehenden Umdrehungszahlen durch Reibung am Bremstopf eine vorgegebene Bremswirkung erzielen.

Für die Arretierung des Außenrades bestehen verschiedene konstruktive Möglichkeiten. Eine konstruktiv bevorzugte Lösung ist dadurch gekennzeichnet, daß das drehbar gelagerte Außenrad einen außenseitigen Zahnkranz aufweist und daß in den Zahnkranz mindestens ein Rasthebel einer Sperreinrichtung eingreift, der zur Einleitung des Federrücklaufs den Rasthebel von dem Zahnkranz löst. In weiterer Ausgestaltung lehrt die Erfindung, daß die Sperreinrichtung einen elektromotorischen Exzenterantrieb und eine elektrische Steuerschaltung mit mindestens einem Kondensator aufweist, die durch Kondensatorentladung den Exzenterantrieb kurzzeitig in Betrieb setzt, wenn die Stromzufuhr zum Stellantrieb unterbrochen ist. Das Ausrasten des oder der Rasthebel wird durch einen Kurzbetrieb des elektromotorischen Exzenterantriebs bewerkstelligt. Bei einer Stromunterbrechung ist dadurch eine sofortige Auskupplung gewährleistet, welche den Federrücklauf einleitet.

Stellantriebe mit Federrücklauf werden, wie eingangs bereits erläutert, auch als AUF/ZU-Antriebe zur Betätigung von Absperrklappen verwendet. Eine Ausführung des Stellantriebes, die für diese Anwendung besonders geeignet ist, ist erfindungsgemäß dadurch gekennzeichnet, daß als antriebsseitiges Kupplungsbauteil auf dem Wellenschaft des Bremsbackenträgers ein von dem Elektroantrieb angetriebenes Antriebsrad drehbar gelagert ist, welches einen Treiberzapfen aufweist, daß auf dem Treiberzapfen eine Schlingfeder angeordnet ist, deren anderes Ende eine auf dem Wellenschaft des Bremsbackenträgers angeordnete zylindrische Kupplungsfläche unter Bildung einer kraftschlüssigen Verbindung zwischen dem Treiberzapfen und dem Wellenschaft des Bremsbackenträgers fest umschließt, und daß eine Sperrvorrichtung vorgesehen ist, welche eine Rotation der Schlingfeder in einer die Rückstellfeder des Untersetzungsgetriebes spannenden Drehrichtung zuläßt sowie die Rotation der Schlingfeder in entgegengesetzter Drehrichtung hemmt. Die Schlingfeder öffnet beim Federrücklauf des Untersetzungsgetriebes, wodurch die kraftschlüssige Verbindung zwischen dem Treiberzapfen und dem Wellenschaft des Bremsbackenträgers lösbar ist. Bei dieser Ausführungsform überträgt die Kupplung Drehmomente nur in einer Drehrichtung. Bei entgegengesetzter Drehrichtung erfolgt stets eine Auskupplung. Beim Federrücklauf wird auch hier die Fliehkraftbremse in der bereits beschriebenen Weise aktiviert.

In weiterer konstruktiver Ausgestaltung lehrt die Erfindung, daß das wellenschaftseitige Ende der Schlingfeder an einer Hülse befestigt ist, welche die Schlingfeder mit Spaltabstand mantelförmig umschließt und an dem Antriebsrad sowie an dem Wellenschaft drehbeweglich abgestützt ist. Die Sperrvorrichtung arbeitet auf die Hülse. Im Rahmen der Erfindung liegt es, den Wellenschaft einstückig mit einer Lagerfläche für die Hülse sowie mit der zylindrischen Kupplungsfläche auszubilden. Vorzugsweise ist auf dem Wellenschaft des Bremsbackenträgers jedoch eine Muffe befestigt, die einen Bund für die Lagerung der Hülse sowie die Kupplungsfläche aufweist. Die Sperreinrichtung kann dadurch verwirklicht werden, daß an der Mantelaußenseite der Hülse eine an einem Ende fixierte Sperrfeder angeordnet ist, die eine Rotation der Hülse nur in einer Drehrichtung zuläßt. Der Auskupplungsvorgang kann schließlich durch eine kurze Rückdrehung des Treiberzapfens weiter optimiert werden. Vorzugsweise weist der Elektroantrieb daher eine elektrische Steuerschaltung mit mindestens einem Kondensator auf, die durch Kondensatorentladung eine kurzzeitige, den Federrücklauf einleitende Rückdrehbewegung des Elektroantriebes und des an diesen angeschlossenen Antriebsrades auslöst, wenn die Stromzufuhr zu dem Stellantrieb unterbrochen ist.

Im folgenden wird die Erfindung anhand einer lediglich ein Ausführungsbeispiel darstellenden Zeichnung ausführlich erläutert. Es zeigen jeweils ausschnittsweise und schematisch
- Fig. 1: den Längsschnitt durch einen Stellantrieb mit Federrücklauf in einer für Absperrklappen geeigneten Ausführungsform,
- Fig. 2: den Längsschnitt durch einen Stellantrieb mit Federrücklauf in einer insbesondere für Regelklappen geeigneten Ausführungsform,
- Fig. 3: die Ansicht A-A in Fig. 2.

Die in den Figuren dargestellten Stellantriebe sind mit einem Federrücklauf ausgerüstet und weisen einen Elektroantrieb 1, ein Untersetzungsgetriebe 2 bekannter Bauart, eine Kupplung 3 zwischen dem Elektroantrieb 1 und dem Untersetzungsgetriebe 2 sowie eine beim Federrücklauf betätigte Bremsvorrichtung 4 auf. Zum Untersetzungsgetriebe 2 gehört eine hier nicht dargestellte Rückstellfeder für den Federrücklauf, die mit der Stellbewegung in Aufzugsrichtung spannbar ist, sowie eine ebenfalls nicht dargestellte Abtriebswelle mit Anschlußmöglichkeit für ein Stellglied.

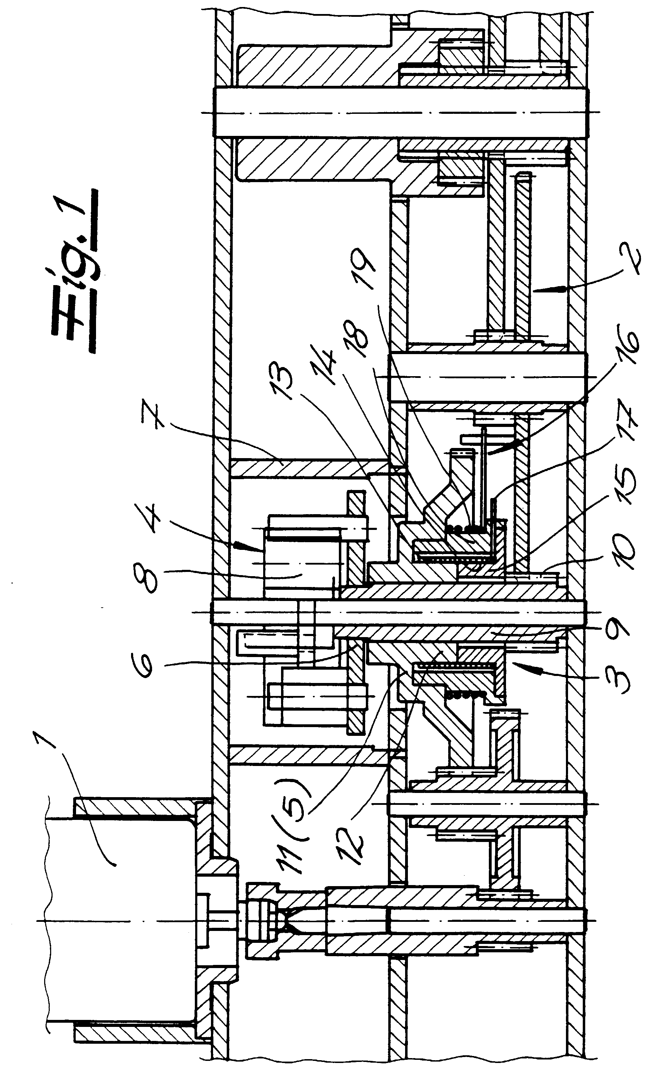

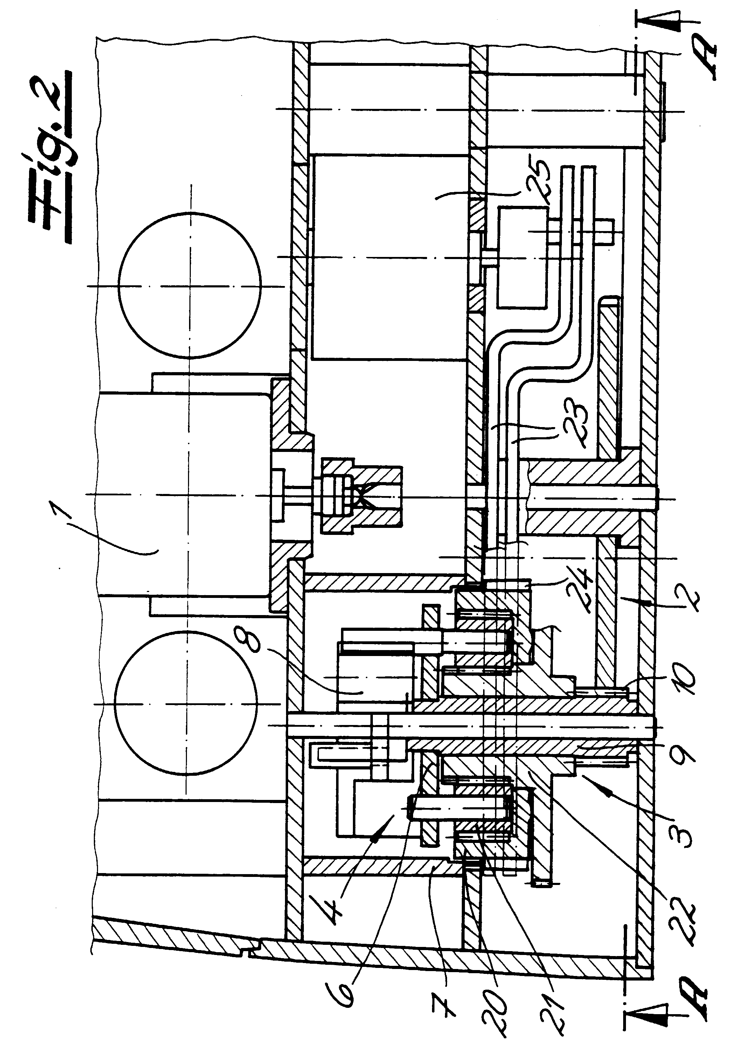

Die Kupplung 3 weist ein antriebsseitiges Kupplungsbauteil 5 und ein beim Federrücklauf von diesem lösbares getriebeseitiges Kupplungsbauteil 6 auf. Die Bremsvorrichtung 4 ist als Fliehkraftbremse ausgeführt und umfaßt einen ortsfesten Bremstopf 7 sowie einen drehbar gelagerten Bremsbackenträger, an dem durch Fliehkraft radial bewegliche Bremsbacken 8 angeordnet sind. Einer vergleichenden Betrachtung der Fig. 1 und 2 entnimmt man ferner, daß der Bremsbackenträger das getriebeseitige Kupplungsbauteil 6 bildet und einen Wellenschaft 9 mit endseitigem, in das Untersetzungsgetriebe 2 eingreifendem Ritzel 10 aufweist. Das antriebsseitige Kupplungsbauteil 5 ist auf dem Wellenschaft 9 des Bremsbackenträgers 6 drehbar gelagert. Kupplung 3 und Bremsvorrichtung 4 bilden eine Funktionseinheit und sind in einer einzigen mechanischen Baugruppe realisiert.

Bei der in Fig. 1 dargstellten Ausführung ist als antriebsseitiges Kupplungsbauteil 5 auf dem Wellenschaft 9 des Bremsbackenträgers 6 ein von dem Elektroantrieb 1 angetriebenes Antriebsrad 11 drehbar gelagert, welches einen Treiberzapfen 12 aufweist. Auf dem Treiberzapfen 12 ist eine Schlingfeder 13 angeordnet. Diese erstreckt sich über das Ende des Treiberzapfens 12 hinaus und umschließt eine zylindrische Kupplungsfläche 14 einer auf dem Wellenschaft 9 des Bremsbackenträgers 6 fest angeordneten Muffe 15. Die Schlingfeder 13 stellt eine kraftschlüssige Verbindung zwischem dem Treiberzapfen 12 und dem Wellenschaft 9 des Bremsbackenträgers 6 her. Ferner ist eine Sperrvorrichtung 16 vorgesehen, welche eine Rotation der Schlingfeder 13 in einer die Rückstellfeder des Untersetzungsgetriebes spannenden Drehrichtung, also in der Aufzugsrichtung, zuläßt sowie die Rotation der Schlingfeder 13 in entgegengesetzter Drehrichtung hemmt. Beim Federrücklauf öffnet die Schlingfeder 13, wodurch die kraftschlüssige Verbindung zwischen dem Treiberzapfen 12 und dem Wellenschaft 9 des Bremsbackenträgers 6 gelöst ist. Dies kommt einer Abkupplung des Treiberzapfens 12 gleich.

Das wellenschaftseitige Ende 17 der Schlingfeder ist an einer Hülse 18 befestigt, welche die Schlingfeder 13 mit Spaltabstand mantelförmig umschließt und einerseits an dem Antriebsrad 11 sowie andererseits an der auf dem Wellenschaft 9 fest montierten Muffe 15 drehbeweglich abgestützt ist. Die Sperrvorrichtung 16 besteht im Ausführungsbeispiel aus einer an der Mantelseite der Hülse 18 angeordneten Sperrfeder 19, die an einem Ende fixiert ist. Bedingt durch den Wicklungssinn der Sperrfeder 19 kann die Hülse 18 in Aufzugsrichtung mitdrehen, hingegen wird sie gegen Rücklauf blockiert.

Der in Fig. 1 dargestellte und insbesondere für Absperrklappen geeignete Stellantrieb arbeitet wie folgt. Bei einer Betätigung des Elektroantriebes 1 kuppelt die Schlingfeder 13 das als Stirnrad ausgeführte Antriebsrad 11 mit dem Wellenschaft 9 des Bremsbackenträgers 6. Mit der Stellbewegung des Elektroantriebes 1 wird die Schlingfeder 13 in Aufzugsrichtung mitgedreht. Gegen Rücklauf ist sie blockiert. Wird die Federenergie der mit der Stellbewegung gespannten Rückstellfeder des Stellantriebes freigesetzt, so drehen die mechanischen Teile entgegen der Aufzugsrichtung. Die Sperrvorrichtung 16 blockiert die Hülse 18, wobei die Schlingfeder 13 durch das an der Hülse 18 eingehängte Federende im Bereich der zylindrischen Kupplungsfläche 14 des Bremsbackenträgers 6 ihre Windungen öffnet, was einem Abkuppeln des Treiberzapfens 12 gleichkomt. Mit dem Federrücklauf, der durch das Auskuppeln eingeleitet wird, wird gleichzeitig die Fliehkraftbremse 4 aktiviert. Die Masse der auf dem Bremsbackenträger 6 angeordneten Bremsbacken 8 ist so abgestimmt, daß sie bei den auftretenden Umdrehungszahlen durch Reibung am Bremstopf 7 eine vorgegebene, die Rückstellbewegung kontrollierende Bremswirkung erzielen.

Der Auskupplungsvorgang kann durch ein kurzes Rückdrehen des Treiberzapfens 12 weiter optimiert werden. Zu diesem Zweck weist der Elektroantrieb 1 vorzugsweise eine elektrische Steuerschaltung mit mindestens einem Kondensator auf, die durch Kondensatorentladung eine kurzzeitige, den Federrücklauf einleitende Rückdrehbewegung des Elektroantriebes 1 und des an diesen angeschlossenen Antriebsrades 11 auslöst, wenn die Stromzufuhr zu dem Stellantrieb unterbrochen ist.

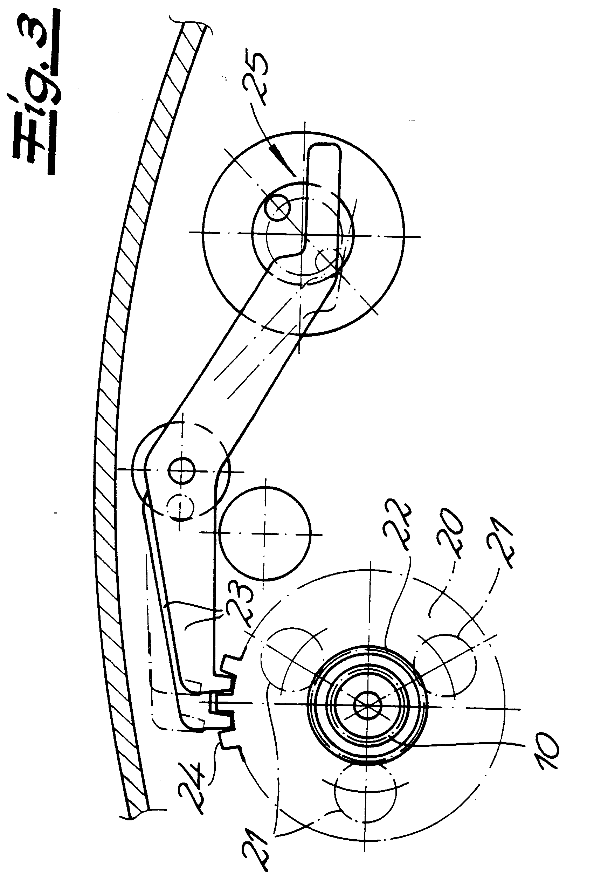

Der in den Fig. 2 und 3 dargestellte Stellantrieb ist für Regelklappen einsetzbar, die nach vorgegebenen Stellfunktionen Stellbewegungen in beiden Drehrichtungen ausführen. Die Kupplung 3 überträgt im Unterschied zu der zuvor beschriebenen Ausführung Drehmomente in beiden Drehrichtungen. Sie ist als Planetengetriebe mit Außenrad 20, Planetenrädern 21 und Zentralrad 22 ausgebildet. Das Zentralrad 22 ist als antriebsseitiges Kupplungsbauteil auf dem Wellenschaft 9 des Bremsbackenträgers 6 drehbar gelagert und von dem Elektroantrieb 1 unter Zwischenschaltung von in Fig. 2 nicht näher dargestellten Ritzeln antreibbar. Die Planetenräder 21 sind an dem Bremsbackenträger 6 angeordnet. Bei eingerückter Kupplung ist das Außenrad 20 arretiert, bei ausgerückter Kupplung frei drehbar. So lange das Außenrad 20 arretiert ist, kann der Stellantrieb in beiden Drehrichtungen wie folgt operieren. Das von dem Elektroantrieb 1 angetriebene Zentralrad 22 treibt über die Planetenräder 21 den Bremsbackenträger 6 und das mit diesem fest verbundene Ritzel 10 an, welches in das in Fig. 2 nicht näher dargestellte Untersetzungsgetriebe eingreift. Beim Federrücklauf ist die Arretierung des Außenrades 20 gelöst und dieses frei drehbar. Dadurch ist der Kraftfluß zwischen dem Ritzel 10 und dem Zentralrad 22 unterbrochen, was einer Auskupplung gleichkommt. Mit dem Federrücklauf wird ferner die Fliehkraftbremse 4 aktiviert. Die Massen der Bremsbacken 6 sind so abgestimmt, daß sie bei den beim Federrücklauf auftretenden Umdrehungszahlen durch Reibung am Bremstopf 7 eine vorgegebene Bremswirkung erzielen.

Zur Arretierung des drehbar gelagerten Außenrades ist eine Sperreinrichtung mit im Ausführungsbeispiel zwei Rasthebeln 23 vorgesehen. Die Rasthebel 23 greifen in einen außenseitigen Zahnkranz 24 des Außenrades 20 ein (vgl. Fig. 3). Zur Sperreinrichtung gehören ferner ein elektromotorischer Exzenterantrieb und eine elektrische nicht dargestellte Steuerschaltung mit mindestens einem Kondensator, die durch Kondensatorentladung den Exzenterantrieb 25 kurzzeitig in Betrieb setzt, wenn die Stromzufuhr zu dem Stellantrieb unterbrochen ist. Durch Kurzbetrieb des Exzenterantriebes 25 werden die Rasthebel 23, wie in Fig. 3 angedeutet, von dem Zahnkranz 24 gelöst. Mit der Auskupplung wird der Federrücklauf eingeleitet.

## Patentansprüche

1. Stellantrieb mit Federrücklauf, insbesondere für Klappen in Heizungs-, Lüftungs- und Klimaanlagen, - mit
einem Elektroantrieb (1),
einem Untersetzungsgetriebe (2), welches eine mit der Stellbewegung spannbare Rückstellfeder für den Federrücklauf aufweist, und
einer beim Federrücklauf betätigten Bremsvorrichtung (4),
**dadurch gekennzeichnet**, daß zwischen dem Elektroantrieb (1) und dem Untersetzungsgetriebe (2) eine Kupplung (3) angeordnet ist, die ein antriebsseitiges Kupplungsbauteil (5) und ein beim Federrücklauf von diesem lösbares getriebeseitiges Kupplungsbauteil (6) aufweist, daß die Bremsvorrichtung (4) als Fliehkraftbremse mit einem ortsfesten Bremstopf (7) und einem drehbar gelagerten Bremsbackenträger, an dem durch Fiehkraft radial bewegliche Bremsbacken (8) angeordnet sind, ausgebildet ist, daß der Bremsbackenträger das getriebeseitige Kupplungsbauteil (6) bildet, sowie einen Wellenschaft (9) mit endseitigem, in das Untersetzungsgetriebe (2) eingreifendem Ritzel (10) aufweist und daß das antriebsseitige Kupplungsbauteil (5) auf dem Wellenschaft des Bremsbackenträgers (6) drehbar gelagert ist.

2. Stellantrieb nach Anspruch 1, dadurch gekennzeichnet, daß die Kupplung (3) als Planetengetriebe mit Außenrad (20), Planetenrädern (21) und Zentralrad (22) ausgebildet ist, wobei das Zentralrad (22) als antriebsseitiges Kupplungsbauteil (5) auf dem Wellenschaft (9) des Bremsbackenträgers (6) drehbar gelagert und von dem Elektroantrieb (1) antreibbar ist, wobei die Planetenräder (21) an dem Bremsbackenträger (6) angeordnet sind und wobei das Außenrad (2) bei eingerückter Kupplung arretiert und bei ausgerückter Kupplung frei drehbar ist.

3. Stellantrieb nach Anspruch 2, dadurch gekennzeichnet, daß das drehbar gelagerte Außenrad (20) einen außenseitigen Zahnkranz (24) aufweist und daß in den Zahnkranz (24) mindestens ein Rasthebel (23) einer Sperreinrichtung eingreift, die zur Einleitung des Federrücklaufes den Rasthebel (23) von dem Zahnkranz (24) löst.

4. Stellantrieb nach Anspruch 3, dadurch gekennzeichnet, daß die Sperreinrichtung einen elektromotorischen Exzenterantrieb (25) und eine elektrische Steuerschaltung mit mindestens einem Kondensator aufweist, die durch Kondensatorentladung den Exzenterantrieb (25) kurzzeitig in Betrieb setzt, wenn die Stromzufuhr zu dem Stellantrieb unterbrochen ist.

5. Stellantrieb nach Anspruch 1, dadurch gekennzeichnet, daß als antriebsseitiges Kupplungsbauteil (5) auf dem Wellenschaft (9) des Bremsbackenträgers (6) ein von dem Elektroantrieb (1) angetriebenes Antriebsrad (11) drehbar gelagert ist, welches einen Treiberzapfen (12) aufweist, daß auf dem Treibenzapfen (12) eine Schlingfeder (13) angeordnet ist, deren anderes Ende eine auf dem Wellenschaft (9) des Bremsbackenträgers (6) angeordnete zylindrische Kupplungsfläche (14) unter Bildung einer kraftschlüssigen Verbindung zwischen dem Treiberzapfen (12) und dem Wellenschaft (9) des Bremsbackenträgers (6) fest umschließt, und daß eine Sperrvorrichtung (16) vorgesehen ist, welche eine Rotation der Schlingfeder (13) in einer die Rückstellfeder des Untersetzungsgetriebes spannenden Drehrichtung zuläßt sowie die Rotation der Schlingfeder (13) in entgegengesetzter Drehrichtung hemmt, wobei die Schlingfeder (13) beim Federrücklauf des Untersetzungsgetriebes öffnet und dadurch die kraftschlüssige Verbindung zwischen dem Treiberzapfen (12) und dem Wellenschaft (9) des Bremsbackenträgers (6) lösbar ist.

6. Stellantrieb nach Anspruch 5, dadurch gekennzeichnet, daß das wellenschaftseitige Ende (17) der Schlingfeder (13) an einer Hülse (18) befestigt ist, welche die Schlingfeder (13) mit Spaltabstand mantelförmig umschließt und an dem Antriebsrad (11) sowie an dem Wellenschaft (9) drehbeweglich abgestützt ist, und daß die Sperrvorrichtung (16) auf die Hülse (18) arbeitet.

7. Stellantrieb nach Anspruch 6, dadurch gekennzeichnet, daß auf dem Wellenschaft (9) des Bremsbackenträgers (6) eine Muffe (15) befestigt ist, die den Bund für die Lagerung der Hülse (18) sowie die Kupplungsfläche (14) aufweist.

8. Stellantrieb nach Anspruch 6 oder 7, dadurch gekennzeichnet, daß an der Mantelaußenseite der Hülse (18) eine an einem Ende fixierte Sperrfeder (19) angeordnet ist, die eine Rotation der Hülse (18) nur in einer Drehrichtung zuläßt.

9. Stellantrieb nach einem der Ansprüche 5 bis 8, dadurch gekennzeichnet, daß der Elektroantrieb (1) eine elektrische Steuerschaltung mit mindestens einem Kondensator aufweist, die durch Kondensatorentladung eine kurzzeitige, den Federrücklauf einleitende Rückdrehbewegung des Elektroantriebes (1) und des an diesen angeschlossenen Antriebsrades (11) auslöst, wenn die Stromzufuhr zu dem Stellantrieb unterbrochen ist.

## Claims

1. An actuating drive with a spring return action, particularly for dampers in heating ventilation and air-conditioning installations, having
an electric drive (1),
a reducing gear (2) which comprises a pull-back spring, which can be tensioned with the actuating movement, for the spring return action, and
a braking device (4) which is operated during the spring return action,
characterised in that a clutch (3) is disposed between the electric drive (1) and the reducing gear (2), which clutch comprises a clutch component (5) on the drive side and a clutch component (6) on the gear side which can be detached from the clutch component on the drive side during the spring return action, that the braking device (4) is constructed as a centrifugal brake comprising a fixed brake drum (7) and a rotatably mounted brake shoe carrier on which brake shoes (8) are disposed which can be moved radially by centrifugal force, that the brake shoe carrier forms the clutch component (6) on the gear side and comprises a spindle shank (9) having a pinion (10) at its end which engages with the reducing gear (2), and that the clutch component (5) on the drive side is rotatably mounted on the spindle shank of the brake shoe carrier (6).

2. An actuating drive according to claim 1, characterised in that the clutch (3) is constructed as a planetary gear with an external gear (20), planet gears (21) and a central gear (22), wherein the central gear (22) is rotatably mounted, as the clutch component (5) on the drive side, on the spindle shank (9) of the brake shoe carrier (6) and can be driven by the electric drive (1), wherein the planet gears (21) are disposed on the brake shoe carrier (6) and wherein the external gear (20) is locked when the clutch is engaged and is freely rotatable when the clutch is disengaged.

3. An actuating drive according to claim 2, characterised in that the rotatably mounted external gear (20) has an external toothed collar (24) and that at least one locking lever (23) of a locking device engages in the toothed collar (24), which locking device releases the locking lever (23) from the toothed collar (24) in order to initiate the spring return action.

4. An actuating drive according to claim 3, characterised in that the locking device comprises an electric-motor operated eccentric drive (25) and an electrical control circuit having at least one capacitor which momentarily sets the eccentric drive (25) in operation by capacitor discharge if the current supply to the actuating drive is interrupted.

5. An actuating drive according to claim 1, characterised in that a drive wheel (11) which is driven by the electric drive (1) is rotatably mounted, as the clutch component (5) on the drive side, on the spindle shank (9) of the brake shoe carrier (6) and comprises a driver journal (12), that a wrap spring (13) is disposed on the driver journal (12), the other end of which wrap spring firmly encompasses a cylindrical clutch face (14) disposed on the spindle shank (9) of the brake shoe carrier (6) forming a non-positive connection between the driver journal (12) and the spindle shank (9) of the brake shoe carrier (6), and that a locking device (16) is provided which permits the rotation of the wrap spring (13) in a direction of rotation which tensions the pull-back spring of the reducing gear and which checks the rotation of the wrap spring (13) in the opposite direction of rotation, wherein the wrap spring (13) opens during the sping return action of the reducing gear and the non-positive connection between the driver journal (12) and the spindle shank (9) of the brake shoe carrier (6) can thereby be detached.

6. An actuating drive according to claim 5, characterised in that the spindle shank end (17) of the wrap spring (13) is fixed to a bushing (18) which surrounds the wrap spring (13) like a jacket at a spacing interval and is supported on the drive wheel (11) and on the spindle shaft (9) so that it can move in rotation, and that the locking device (16) acts on the bushing (18).

7. An actuating drive according to claim 6, characterised in that a sleeve (15) is fixed to the spindle shank (9) of the brake shoe carrier (6), which sleeve comprises the collar for the mounting of the bushing (18) and also comprises the clutch face (14).

8. An actuating drive according to claim 6 or 7, characterised in that a locking spring (19) which is fixed at one end is disposed on the casing outer face of the bushing (18), which spring only permits rotation of the bushing (18) in one direction of rotation.

9. An actuating drive according to any one of claims 5 to 8, characterised in that the electric drive (1) comprises an electical control circuit having at least one capacitor, which circuit triggers, by capacitor discharge, a momentary backward rotational movement of the electric drive (1) and of the drive wheel (11) attached thereto, which backward movement initiates the spring return action, if the current supply to the actuating drive is interrupted.

## Revendications

1. Actionneur à rappel élastique, en particulier pour des clapets dans des installations de chauffage, de ventilation et de climatisation, comprenant un moyen d'entraînement électrique (1), un mécanisme démultiplicateur (2) comportant un ressort de rappel mis en tension par le mouvement de positionnement et servant au rappel élastique, et un dispositif de freinage (4) actionné lors du rappel élastique, caractérisé en ce que, entre le moyen d'entraînement électrique (1) et le mécanisme démultiplicateur (2), est disposé un moyen d'accouplement (3) qui comporte un élément d'accouplement (5) côté entraînement et un élément d'accouplement (6) côté mécanisme, en ce que le dispositif de freinage (4) est conçu sous la forme d'un frein centrifuge comprenant un pot de freinage fixe (7) et un porte-mâchoires de frein qui est monté tournant et sur lequel sont montées des mâchoires de frein (8) déplaçables radialement par la force centrifuge, en ce que le porte-mâchoires de frein forme l'élément d'accouplement (6) côté mécanisme et comprend un arbre (9) pourvu à son extrémité d'un pignon (10) en prise avec le mécanisme démultiplicateur (2), et en ce que l'élément d'accouplement (5) côté entraînement est monté en rotation sur l'arbre du porte-mâchoires de frein (6).

2. Actionneur selon la revendication 1, caractérisé en ce que le moyen d'accouplement (3) est conçu sous la forme d'un engrenage planétaire avec une roue extérieure (20), des roues planétaires (21) et une roue centrale (22), la roue centrale (22) étant montée en rotation comme élément d'accouplement (5) côté entraînement sur l'arbre (9) du porte-mâchoires de frein (6) et pouvant être entraînée par le moyen d'entraînement électrique (1), les roues planétaires (21) étant montées sur le porte-mâchoires de frein (6), et la roue extérieure (2) étant bloquée lorsque le moyen d'accouplement est embrayé et étant en libre rotation lorsque le moyen d'accouplement est débrayé.

3. Actionneur selon la revendication 2, caractérisé en ce que la roue extérieure (20) montée en rotation comporte une couronne dentée extérieure (24), et en ce que dans la couronne dentée (24) s'engage au moins un levier à crans (23) d'un dispositif d'arrêt qui, pour provoquer le rappel élastique, dégage le levier à crans (23) de la couronne dentée (24).

4. Actionneur selon la revendication 3, caractérisé en ce que le dispositif d'arrêt comporte un organe excentrique (25) à moteur électrique et un circuit de commande électrique qui comprend au moins un condensateur et qui, par décharge du condensateur, met brièvement en marche l'organe excentrique (25) lorsque l'alimentation en courant de l'actionneur est interrompue.

5. Actionneur selon la revendication 1, caractérisé en ce que, comme élément d'accouplement (5) côté entraînement, une roue d'entraînement (11) entraînée par le moyen d'entraînement électrique (1) est montée en rotation sur l'arbre (9) du porte-mâchoires de frein (6) et comporte une broche d'entraînement (12), en ce que, sur la broche d'entraînement (12), est disposé un ressort enroulé (13) dont l'autre extrémité entoure fermement, en formant une liaison par conjugaison de forces entre la broche d'entraînement (12) et l'arbre (9) du porte-mâchoires de frein (6), une surface d'accouplement cylindrique (14) située sur l'arbre (9) du porte-mâchoires de frein (6), et en ce qu'il est prévu un dispositif d'arrêt (16) qui autorise la rotation du ressort enroulé (13) dans le sens de rotation mettant en tension le ressort de rappel du mécanisme démultiplicateur et interdit la rotation du ressort enroulé (13) dans le sens de rotation opposé, le ressort enroulé (13) s'ouvrant lors du rappel élastique du mécanisme démultiplicateur et annulant ainsi la liaison par conjugaison de forces entre la broche d'entraînement (12) et l'arbre (9) du porte-mâchoires de frein (6).

6. Actionneur selon la revendication 5, caractérisé en ce que l'extrémité côté arbre (17) du ressort enroulé (13) est fixée à une douille (18) qui entoure le ressort enroulé (13) à la manière d'un fourreau en ménageant un interstice et qui prend appui en rotation sur la roue d'entraînement (11) et sur l'arbre (3), et en ce que le dispositif d'arrêt (16) agit sur la douille (18).

7. Actionneur selon la revendication 6, caractérisé en ce que, sur l'arbre (9) du porte-mâchoires de frein (6), est fixé un manchon (16) qui comporte la collerette pour recevoir la douille (18) ainsi que la surface d'accouplement (14).

8. Actionneur selon la revendication 6 ou 7, caractérisé en ce que, sur la périphérie extérieure de la douille (18), est disposé un ressort d'arrêt (19) qui est immobilisé à l'une de ses extrémités et qui n'autorise une rotation de la douille (18) que dans un sens de rotation.

9. Actionneur selon l'une des revendications 5 à 8, caractérisé en ce que le moyen d'entraînement électrique (1) comporte un circuit de commande électrique qui comprend au moins un condensateur et qui, par décharge du condensateur, provoque la rotation inverse du moyen d'entraînement électrique (1), à l'origine du rappel élastique, et de la roue d'entraînement (11) qui y est reliée lorsque l'alimentation en courant de l'actionneur est interrompue.
